Europäisches Patentamt

European Patent Office

Office européen des brevets

(11) Publication number: **0 327 687**
**A2**

## (12) EUROPEAN PATENT APPLICATION

(21) Application number: **88119233.0**

(22) Date of filing: **18.11.88**

(51) Int. Cl.⁴: **B01D 13/04 , C04B 38/00 , C04B 41/87**

The title of the invention has been amended (Guidelines for Examination in the EPO, A-III, 7.3).

(30) Priority: **11.12.87 US 131774**

(43) Date of publication of application:
**16.08.89 Bulletin 89/33**

(84) Designated Contracting States:
**FR NL**

(71) Applicant: **NORTON COMPANY**
**1 New Bond Street**
**Worcester, MA 01606-2698(US)**

(72) Inventor: **Hay, Robert A.**
**6 Oakwood Avenue**
**Dudley Massachusetts 01570(US)**

(74) Representative: **Baillie, Iain Cameron et al**
**c/o Ladas & Parry Isartorplatz 5**
**D-8000 München 2(DE)**

(54) **Ultrafiltration membranes.**

(57) Strong and durable ultrafiltration membranes with effective separating layers having average pore sizes at almost any point in the range 10 - 80 nm can be made entirely out of alpha alumina by seeding boehmite sols with appropriate seeds, such as very fine alpha alumina with a specific surface area of more than 100 m²/g, gelling a thin layer of the sol by contact with a microfilter support, drying, and controlled heating of the coated support.

EP 0 327 687 A2

This invention relates to the field of ultrafiltration membranes, which are defined for the purposes of this application as membranes with an effective pore size of 100 nanometers (nm) or less. More particularly, this invention relates to fine ultrafiltration membranes, i.e., membranes having effective pore sizes of 35 nm or less. Ultrafiltration membranes, as known in the art, may be used as filters, selective diffusion or effusion barriers, osmosis or electrophoresis membranes, zones for controlled reactions between gas and liquid phases, etc. The membranes may be used unsupported, but more often they are backed by much stronger and thicker supporting membranes with substantially larger pore sizes, so that the supporting membrane contributes mechanical support without significantly restricting the flow of materials through the ultrafiltration membrane. A convenient and frequently used support is a microfilter, which has an average pore size between about 100 and 5000 nm.

For supported ultrafiltration membranes, or for any other type of filter or membrane with two or more layers having different pore sizes, the layer with the finest pore size, which controls the separation effectiveness of the total assembly of membrane plus support, is denoted herein as the "effective separating layer" or "ESL".

TECHNICAL BACKGROUND

It is known in the art to prepare filtration membranes of gamma alumina by depositing boehmite or bayerite particles from sols onto microporous alumina supports, then drying the deposit. The thickness of the deposited gel can be controlled by control of the time of contact between the sol and the support and the characteristics of the sol, as taught by A. Leenaars et al., 16 Chemtech 560-64 (1986). As described in this reference, the membranes may be used either in dried, but still chemically hydrated form, or they may be heated to give unhydrated gamma alumina ESL'S with pore sizes as small as 2.7 nm. When these membranes are heated sufficiently to convert the ESL'S to alpha alumina, however, the pore size rapidly increases and the porosity decreases (page 562).

Gamma alumina is known to have significantly less corrosion resistance than alpha alumina in a variety of practically important environments, such as sodium hypochlorite, sodium hydroxide, and nitric acid solutions in water.

A. Leenaars et al., 19 Journal of Materials Sci ence 1077-1088 (1984) shows in Table I alpha alumina membranes with minimum pore sizes above 38 nm. S. Wilson et al, 82 Journal of Colloid and Interface Science 507-17 (1981), report alpha aluminas with pore sizes of as little as 25 nm, formed from an intermediate gamma alumina phase with pores about 0.8 nm in size. The products reported by Wilson are believed not to be in membrane form, but rather in the form of powders.

It is also known that the transformation of gelled amorphous alumina hydrates to polycrystalline alpha alumina can be accomplished more rapidly and at lower temperatures than would otherwise be required by seeding or nucleating the deposit with small particles of crystalline alumina. U. S. Patent 4,623, 364 of Nov. 18, 1986 to Cottringer et al. teaches that alpha alumina is effective for this purpose, and J. McArdle et al, 69 Journal of the American Ceramic Society, C98-C101 (1986) teaches that gamma alumina may also be used. These teachings, however, and all previous teachings of nucleated transformation known to the applicant, have been applied to bulk samples in which a goal is the achievement of high density in the product, not the preparation of porous membranes. Indeed, because seeding or nucleation promotes densification, as taught by these references already cited, it would be expected to make more difficult the attainment of consistent controlled fine porosity, as required for ultrafiltration membranes.

SUMMARY OF THE INVENTION

Supported fine ultrafiltration membranes in which the ESL consists essentially of alpha alumina can be obtained by (a) coating a microfilter support with a layer of aluminum hydrate gel having dispersed therein an effective amount of finely divided crystalline seed particles, (b) drying the gel layer and support, and (c) heating the dried gel layer and support at a temperature below 1300 C for a sufficient time to convert the dried gel into alpha alumina. In this context, "consisting essentially of alpha alumina" means that the ESL is at least sixty percent by volume alpha alumina and that the ESL has substantially the same resistance to chemical attack as characterizes commercially pure polycrystalline alpha alumina.

DESCRIPTION OF THE PREFERRED EMBODIMENTS

The preferred supports for ultrafilters according to this invention are substantially 100 % alpha alumina tube microfilters available from Norton Company, Worcester, Massachusetts under the trademark CERAFLO. These tubes are available in average pore sizes from 0.2 microns to 5 microns or more, with the ESL on either the inside or outside of the tube.

The preferred alumina hydrate is boehmite, and the preferred source of colloidal boehmite is a commercially available product, SB Plural Alumina supplied by Condea. The colloidal dispersion as supplied is preferably diluted with water if necessary to bring its concentration within the range of 0.5 - 10 weight per cent (wt %) ALOOH content. The dispersion of proper boehmite concentration is normally slightly acidified to bring it to the point of incipient gelation. Any convenient fairly strong acid that does not leave any undesirable residue upon heating, such as hydrochloric, perchloric, or acetic acid may be used, but nitric acid is generally preferred.

Before or after acidification, the boehmite dispersion is mixed with a suitable amount of fine crystalline seeds. Alpha alumina seeds are generally preferred, but gamma alumina and alpha iron oxide, or any crystal that promotes the growth of alpha alumina may also be used. The total weight of crystalline solid in the seeds preferably is 0.05 to 1 wt % of the amount of boehmite in the dispersion, and still more preferably is 0.4-0.8 wt % of the boehmite. The seeds should be sufficiently small to have a specific surface area of at least 35 square meters per gram ($m^2$/g) and preferably have a surface area of at least 100 $m^2$/g. The presence of minor amounts of common impurities such as silica, magnesia, or titania in predominantly alumina seeds does not appear to do any significant harm, so long as these materials are not present in sufficient amount to reduce significantly the chemical resistance of the polycrystalline alpha alumina ESL formed in the process according to this invention.

The seeds preferably are alpha alumina, and the preferable source of seeds is the attrition of predominantly alumina milling media during vibratory milling, as described in U. S. Patent 4,623,364, the entire specification of which is hereby incorporated herein by reference.

The thickness of the gel layer deposited on the support can be controlled by the time of contact with the support as is generally known in the art, and the thickness of the filtering layer eventually formed is generally close to that of the gel layer from which it is formed. Layers thicker than about 5 microns tend to crack during drying and/or firing, but multiple coating of successive layers, with intermediate drying and firing of each individual layer, can be used to build up effective filtering layers 20 microns thick or more, if such thick ultrafine layers are needed.

Drying at room temperature of gel layers prepared according to this invention is preferred, and may generally be accomplished in 24 hours or less. The dried layer must be carefully and slowly heated to convert it to alpha alumina, in order to avoid cracking and/or the development of undesirable large pores in the layer. A suitable heating program for a layer of dried gel up to 5 microns thick is to increase the temperature at a rate of 20 C per hour from room temperature to 600 C, hold at 600 C for six hours, increase the temperature at a rate of 50 C per hour to 900, hold at 900 C for three hours, raise the temperature at a uniform rate to 1000 C over two hours, and hold at 1000 C for one hour. Cooling should be at a rate of no more than 300 C/hr.

In order to reduce the chances of crack or large pore formation in the ESL'S according to this invention, it is often advantageous to build up ESL'S substantially thicker than one micron by a series of depositions about one micron thick, with intermediate drying and heating after each deposition only to a temperature, such as 600 - 900 C, sufficient to convert to gamma rather than alpha alumina. After the total desired thickness of the ESL has been built up in predominantly gamma alumina, additional heating to a higher temperature is performed to convert the entire layer substantially to alpha alumina.

It is also often advantageous to use a water soluble polymer such as poly(vinyl alcohol), poly(ethylene glycol), or cellulose ether in the formulation so as to reduce the chances of forming cracks or large pores. Use of such polymers is especially valuable when the gel layer is applied in thicknesses greater than 5 microns and/or over a support with exceptionally large pores.

If difficulty is experienced with preparing crack free ESL'S on a support with large pores, the difficulties may often be overcome by depositing an intermediate layer with somewhat larger pores, drying the intermediate layer, and either firing it or leaving it in the green state until a green ESL according to this invention has been added over the intermediate layer. The intermediate layer may be applied according to methods taught in French Patent 2,502,508.

The practice of this invention may be illustrated by the following examples.

Example 1

An aqueous dispersion containing 1 wt % boehmite, 0.006 wt % of alpha alumina seeds, and 0.07 mole of $HNO_3$ per mole of boehmite was used to coat a 20-25 cm long cylindrical microfiltration tube with 3 mm inside diameter and 5 mm outside diameter. The tube, commercially available under the name CERAFLO from Norton Company, Worcester, Massachusetts, had an initial ESL with an average pore size of about 200 nm.

The tube used as a support was first coated with an intermediate layer of readily sinterable, 99.5 % or better purity alpha alumina particles averaging about 200 nm in diameter from an aqueous dispersion of such particles to give a layer 1-10 microns thick on the interior of the tube. This intermediate layer was dried at 22 C for 24 hours and then fired at 1000 C for 3 hours.

The boehmite dispersion described above was drawn up into the tube precoated with the intermediate layer and allowed to drain out again as soon as it had reached the top. This operation, which required about two seconds, produced a green gel layer 1-2 microns thick over the intermediate layer. Even though the top of the tube was exposed for less time than the bottom, the gel layer was fairly uniform over the entire length of the tube, because the thickness depends primarily on the extent to which the sol penetrates the tube by capillary attraction, not on any time dependent settling rate such as might control the thickness on a horizontal surface.

The tube with its deposited gel layer was dried at 24 C for 24 hours and then its temperature was increased at a rate of 20 C per hour from room temperature to 600 C, held at 600 C for six hours, increased at a rate of 50 C per hour to 900, held at 900 C for three hours, raised at a uniform rate to 1000 C over two hours, and held at 1000 C for one hour. This produced a final ultrafiltration membrane with an ESL 1-2 microns thick having an average pore size of 10-12.5 nm and a total porosity of about 40 % and consisting essentially of alpha alumina; none of the X ray diffraction lines characteristic of the other crystal forms of alumina could be detected.

## Example 2

This example was identical with Example 1 up through the point of application of the boehmite gel layer. In this example, this layer of gel was dried and then heated only through the part of the temperature program through six hours at 600 C. A second gel layer was then applied over the first one in the same manner as the first layer. From this point on, the process continued exactly as after the application of the only gel layer in Example 1. The resulting product had the same characteristics as that of Example 1, except that the ESL thickness ranged from 1-3 microns.

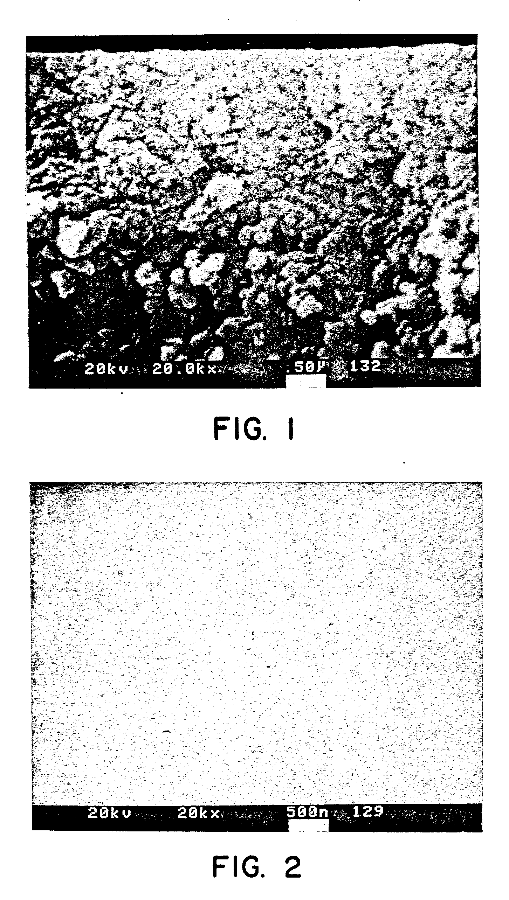

Reference is made to Figures 1-5 herein illustrating the invention.

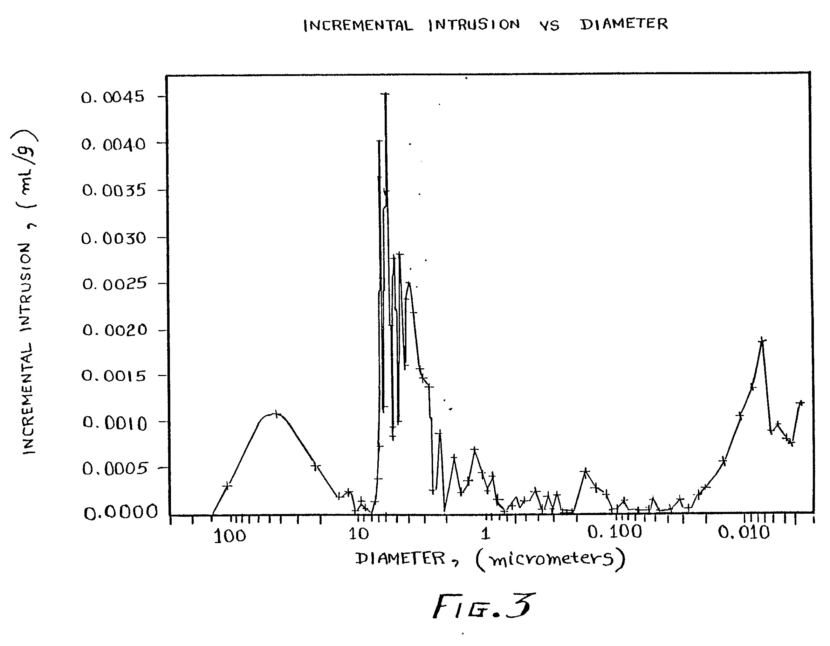

Figures 1 and 2, which are at the same scale, are photomicrographs of the inner part of a cross section and of the inner diameter surface respectively of a tube made in this example. The upper part of Figure 1 shows the ESL, with pores barely detectable at this scale, in contrast to the lower part of the Figure, representing the initially coated alpha alumina layer with an effective pore diameter of about 0.1 micron. Figure 2 shows the extraordinarily uniform inner surface achieved by the method of this invention. Figure 3 shows an analysis by mercury porosimetry of a tube made according to this example. The porosity shown in the region less than about 0.027 microns represents the ESL in this membrane.

## Example 3

This example was identical to Example 2, except that (1) the intermediate coating with dispersed alpha alumina and drying and firing such coating was not performed and (2) the first layer of boehmite gel was dried but not fired at all before the second layer of such gel was applied over it.

## Example 4

This example was identical to Example 1, except that the heating (but not the drying) of the intermediate layer of alpha alumina was eliminated. This produced a tube with an ESL having the same characteristics as that in Example 1, underlain by another layer of alpha alumina 1-10 microns thick with a total porosity of about 35 %. The filtering characteristics of the tubes made according to this example were essentially the same as in Example 1, but in repeating both examples it was found that the method of this example led to a lower rate of rejection for cracks and large pores than did the method of Example 1.

Use of Membranes Made According to the Invention

More than fifty total membranes were made in accordance with examples 1-4 and tested for their effectiveness in filtering various macromolecular dispersions. In these tests, a fixed volume of each dispersion was repeatedly pumped through the interiors of the membranes under sufficient pressure to maintain a pressure drop of about 7 kilopascals across the membrane. The permeate was sampled every five minutes until a constant concentration of dispersate was determined in the permeate in two successive samplings.

Membranes made according to any of examples 1-4 were found to have substantially the same effectiveness in separating the materials tested. All these membranes, except for a small fraction that had cracked or developed anomalously large pores during processing, rejected over 95% of bovine serum albumin with an average molecular weight of about 67,000, over 80 % of a polyvinylpyrrolidone dispersion with an average molecular weight of about 160,000, and over 90 % of human blood Immunoglobulin G, also with a molecular weight of about 160,000.

Examples 5-8

These examples were prepared in the same way as Examples 1-4 respectively, except that in each case the final heating included three hours at 1000 C rather than only one hour as in the previous examples. The tubes produced had alpha alumina ESL'S with average pore sizes of about 33 nm and 35-40 % total porosity.

Examples 9-12

These examples were prepared in the same way as Examples 1-4 respectively, except that in each case the final heating included nine hours at 1000 C rather than only one hour as in examples 1-4. The tubes produced had alpha alumina ESL'S with average pore sizes of about 45 nm and 35-40 % total porosity.

Example 13

A support tube of the same type as used for examples 1-12 was used for this example. A boehmite sol with 5.6 wt % boehmite, 0.034 wt % of seeds having a specific surface area of 110 $m^2/g$ and containing at least 80% alpha alumina, and sufficient nitric acid to provide 0.07 mole $HNO_3$ per mole of boehmite was used. This sol was forced by air pressure to flow through the interior to the top of the support tube and then allowed to drain immediately, producing a gel layer about five microns thick.

The tube containing the gel layer was dried for 24 hours at room temperature and then heated at 30 C/hr to 600 C, followed by heating at 200 C/hr to 1000 C and holding at 1000 C for one hour. This produced a membrane according to this invention with an ESL that was all alpha alumina within the precision of X-ray diffraction analysis, had an average pore size of 10-12.5 nm as measured by mercury porosimetry, and was about 4 microns thick.

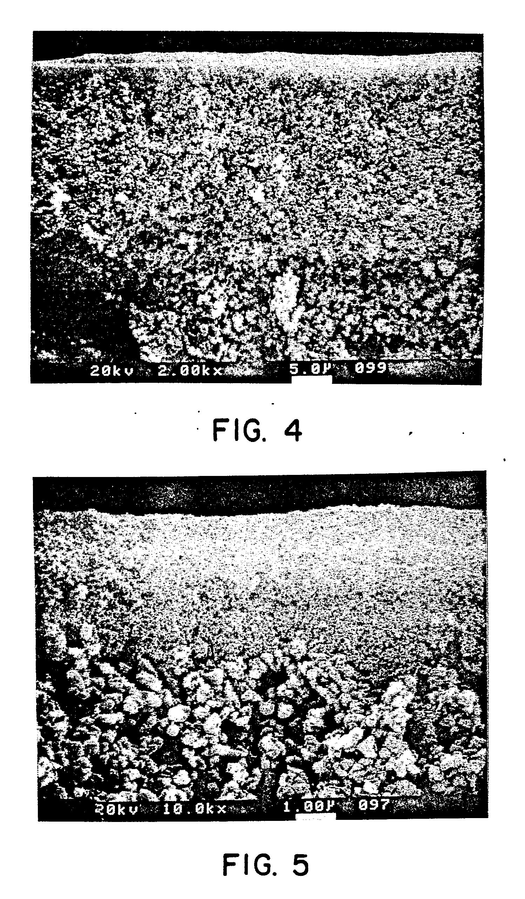

Figures 4 and 5 are photomicrographs, at two different degrees of magnification, of the inner cross section of a tube prepared according to this example. Figure 4 shows the ESL as a thin layer on top, the intermediate layer corresponding to the inner layer of the original support tube, with effective pore size of about 0.2 microns dispersion, and at the bottom another portion of the original tube support tube, with effective pore size of about 1 micron. Figure 5 is on too large a scale to show the latter layer, but shows even better than Figure 4 the highly uniform porosity achieved in the ESL.

5

General Comparison of Results of Heating Seeded and Unseeded Gels

Table 1 illustrates the significant difference made by seeding in the range of pore sizes obtainable when transformation of boehmite gels to alpha alumina is complete. In seeded gels, transformation to alpha is complete in one hour at 1000 C, and the pore size is only a little over 10 nm. By holding at 1000 C, the pore size can be increased to more than 40 nm, but the distribution remains narrow. For unseeded samples, the transformation to alpha is not complete below 1200 C and is accompanied by pore growth that can not be controlled to give pores as fine as those obtained readily with the use of seeding.

Table 1

| COMPARISON OF EXTENT OF TRANSFORMATION TO ALPHA ALUMINA AND OF PORE SIZE UPON HEATING SEEDED AND UNSEEDED BOEHMITE GELS | | |
|---|---|---|
| Soak Temperature and Time | Average Pore Size, Nm | Transformation to Alpha |
| Unseeded | | |
| 600 C - 3 hours | 8.3 | No |
| 900 C - 3 hours | 9.1 | No |
| 1000 C - 1 hour | 9.7 | No |
| 1000 C - 3 hours | 10.8 | No |
| 1200 C - < 0.1 hour | 11.2 | No |
| 1200 C - 3 hours | 80.7 | Yes |
| Seeded | | |
| 600 C - 3 hours | 8.2 | No |
| 900 C - <0.1 hour | 8.7 | No |
| 1000 C - 1 hour | 11.5 | Yes |
| 1000 C - 3 hours | 32.2 | Yes |
| 1000 C - 6 hours | 43.3 | Yes |
| 1000 C - 9 hours | 44.2 | Yes |
| 1100 C - < 0.1 hour | 39.7 | Yes |
| Note: All samples from 1 wt % boehmite gels; 0.006 wt % seeds when used. Pore sizes measured by mercury porosimetry and conversion to alpha alumina measured by X ray diffraction. | | |
| --(End of Table 1)-- | | |

**Claims**

1. An ultrafiltration membrane comprising an effective separating layer that consists essentially of alpha-alumina and has an average pore size of 35 nm or less.

2. A membrane according to claim 1, additionally comprising a porous support, having substantially greater permeability than said effective separating layer, strongly bonded to said effective separating layer.

3. A membrane according to claim 2, wherein the porous support consists essentially of alpha-alumina.

4. A membrane according to claim 2 or 3, wherein said porous support is in the form of a tube.

5. A membrane according to claim 4, wherein said tube has a plurality of layers with different pore sizes arranged so that a material passing through the wall of the tube will pass through each of said layers.

6. A membrane according to claim 5, wherein said tube has its finest pore layer on the inside of the tube.

7. A membrane according to claim 5 or 6, wherein said tube has an average pore size of 100-300 nm in its finest pore layer.

8. A membrane according to any one of the preceding claims, wherein said effective separation layer has an average pore size not greater than 20 nm.

9. A process for manufacturing an ultrafiltration membrane comprising an effective separating layer consisting essentially of alpha-alumina and a porous support bonded to said effective separating layer, said process comprising:

(a) coating a porous support with a layer of alumina hydrate gel having dispersed therein an effective amount of finely divided crystalline seed particles;

(b) drying said gel layer and support; and

(c) heating the dried gel layer and support at a temperature below 1300° C. for a sufficient time to convert the dried gel into alpha-alumina and to bond it to the support.

10. A process according to claim 9, wherein said seed particles are at least 80 wt % alpha-alumina.

11. A process according to claim 9 or 10, wherein said alpha alumina seed particles are present in an amount at least equal to 0.05 wt % of the amount of aluminum hydrate in the sample.

12. A process according to any one of the preceding claims, wherein said alumina hydrate is boehmite.

13. A process according to any one of claims 9-12, wherein said seed particles are derived from self-attrition of vibratory milling media containing at least 80 wt % alpha alumina.

14. A process according to any one of claims 9-13, wherein said support consists essentially of microporous polycrystalline alpha-alumina.

FIG. 1

FIG. 2

INCREMENTAL INTRUSION VS DIAMETER

FIG.3

EP 0 327 687 A2

FIG. 4

FIG. 5